# FASCICULE DE BREVET EUROPEEN

(11) **EP 3 072 355 B1**
(45) Date de publication et mention de la délivrance du brevet: **17.06.2020**
(21) Numéro de dépôt: 14805784.7
(22) Date de dépôt: 07.11.2014
(51) Int. Cl.: H04W 4/90, H04W 88/06, H04W 76/16, H04W 84/08

(54) **PROCÉDÉ, TERMINAL ET SYSTÈME DE RADIOCOMMUNICATION À DÉMARRAGE RAPIDE**
SCHNELLSTARTVERFAHREN, ENDGERÄT UND SYSTEM ZUR FUNKKOMMUNIKATION
QUICK-START METHOD, TERMINAL AND SYSTEM FOR RADIO COMMUNICATION

(30) Priorité: 19.11.2013 FR 1302664
(43) Date de publication de la demande: 28.09.2016
(73) Titulaire: Airbus DS SAS, 78990 Elancourt (FR)
(72) Inventeur: PATEROUR, Olivier, F-78280 Guyancourt (FR); RISY, Frédéric, F-92100 Boulogne Billancourt (FR); LEFAY, Christian, F-78000 Versailles (FR)
(74) Mandataire: Cabinet Camus Lebkiri
(86) Numéro de dépôt international: PCT/EP2014/002979
(87) Numéro de publication internationale: WO 2015/074742

(56) Documents cités:
- WO-A1-2006/125043
- US-A1- 2013 203 461
- "Terrestrial Trunked Radio (TETRA); User Requirement Specification TETRA Release 2.1; Part 6: Smart Card (SC) and Subscriber Identity Module (SIM)", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. TETRA 1, no. V1.2.1, 1 août 2011 (2011-08-01), XP014067969,
- Gianmarco Baldini: "The evolution of Public Safety Communications in Europe: the results from the FP7 HELP project", ETSI RECONFIGURABLE RADIO SYSTEMS WORKSHOP, 6 décembre 1012 (1012-12-06), XP055133430, Sophia Antipolis, France Extrait de l'Internet: URL:http://upcommons.upc.edu/e-prints/bits tream/2117/22884/1/The evolution of Public Safety Communications in.pdf [extrait le 2014-08-06]
- EADS: "EPS and UE functional and performance requirements for GCSE_LTE", 3GPP DRAFT; S1-123034, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. Edinburgh, UK; 20121108 - 20121109 19 novembre 2012 (2012-11-19), XP050681979, Extrait de l'Internet: URL:http://www.3gpp.org/ftp/tsg_sa/WG1_Ser v/TSGS1_60_GCSE_adhoc/docs/ [extrait le 2012-11-19]
- Anonymous: "Boot Time of Ubuntu linux is less than 10 seconds, how fast does your PC boot ?", , 11 August 2010 (2010-08-11), XP055647642, Retrieved from the Internet: URL:https://www.clickonf5.org/linux/ubuntu -boots-much-faster-than-windows/8696 [retrieved on 2019-11-29]

## Description

### DOMAINE TECHNIQUE ET OBJET DE L'INVENTION

La présente invention se rapporte au domaine des télécommunications et concerne plus particulièrement un terminal, un procédé et un système de communication.

### ETAT DE LA TECHNIQUE

Les réseaux mobiles privés de radiocommunication (Private Mobile Radiocommunications ou PMR en langue anglaise), tels que, par exemple, les réseaux de type Tetra, Tetrapol ou P25 sont utilisés ordinairement par les professionnels des services de sécurité (armées, polices, ambulances, pompiers...), des entreprises de bâtiments ou de travaux publics ou bien encore de l'industrie. De tels réseaux utilisent des bandes de fréquences dédiées, par exemple selon le type d'utilisateur, et sont des réseaux fermés, c'est-à-dire dont l'accès en émission est limité à un groupe de professionnels prédéterminé.

Les services offerts par les terminaux de communication d'un réseau PMR de type Tetra, Tetrapol ou P25 sont limités du fait du nombre restreint de ressources disponibles dans un tel réseau. Ce type de réseau permet ainsi uniquement la transmission de communications vocales ou de données à faible débit. Il n'est donc pas possible d'envoyer des données à des débits élevés à travers un tel réseau. A titre d'exemple, il n'est pas possible de transmettre une communication vidéo entre deux terminaux à travers un tel réseau.

Pour résoudre cet inconvénient, on connaît aujourd'hui des réseaux PMR large-bande qui permettent d'échanger des données à des débits élevés, supérieurs à 1 Mb/s, par exemple pour permettre la tenue d'une visio-conférence

De tels réseaux nécessitent l'utilisation de terminaux de type « smartphone » offrant un service de communication vocale similaire à celui d'un terminal PMR connu de l'homme du métier sous le nom de « Push-to-talk ». Un tel terminal utilise de manière connue un module d'exploitation comprenant un système d'exploitation (« Operating System » ou OS en langue anglaise) de type iOS®, Windows Phone®, Windows Mobile® ou Android®.

Un tel système d'exploitation nécessite cependant un temps de démarrage relativement long (« booting time » en langue anglaise), au moins environ 45 secondes, ce qui présente un inconvénient. Or, afin d'être utilisable pour des services d'urgence, par exemple par la police ou les pompiers, un terminal doit satisfaire à des exigences standards et doit notamment pouvoir être opérationnel en moins de 10 secondes. Par le terme « opérationnel », on entend que le terminal est utilisable pour communiquer à travers le réseau.

Le document US 2013/203461 A1 (LI WENJIE [CN]), 08/08/2013 intitulé « Multi-mode multi-sim multi-standby communication terminal, and arbitration method and device for arbitrating receiving conflict thereof » et le rapport technique de l'European Telecommunications Standards Institute (ETSI), vol. TETRA 1, no. V1.2.1 du 1 août 2011 intitulé « Terrestrial Trunked Radio (TETRA) ; User Requirement Spécification TETRA Realease 2.1 ; Part 6 : Smart Card (SC) and Subscriber Identitiy Module (SIM) » sont connus de l'état de la technique.

### PRESENTATION GENERALE DE L'INVENTION

La présente invention a pour but de remédier au moins en partie à ces inconvénients en proposant un terminal de communication qui démarre en moins de dix secondes afin de pouvoir offrir rapidement des services PMR de base telle que, par exemple, une communication de type voix, tout en offrant ensuite des services de données à haut débit et de la fiabilité.

A cet effet, l'invention a pour objet un terminal mobile de communication selon la revendication indépendante remarquable en ce qu'il comprend un module de communication bande-étroite, un module de communication large-bande, un premier module d'exploitation et un deuxième module d'exploitation, ledit premier module d'exploitation étant configuré pour établir une communication à travers un réseau de communication bande-étroite via ledit module de communication bande-étroite, de préférence dans un délai inférieur à dix secondes après le démarrage dudit terminal, ledit deuxième module d'exploitation étant configuré pour établir une communication à travers ledit réseau de communication bande-étroite via le module de communication bande-étroite et pour établir une communication à travers un réseau de communication large-bande via ledit module de communication large-bande.

De manière avantageuse, le module de communication large-bande est configuré pour communiquer ou échanger des données avec un réseau de communication large-bande à un débit supérieur à 1 Mb/s, de préférence 10 Mb/s. Un tel terminal de communication dit « dual » permet donc de communiquer très rapidement après son démarrage via le réseau bande-étroite en utilisant le premier module d'exploitation puis de continuer à communiquer par la suite via le réseau bande-étroite en utilisant le deuxième module d'exploitation qui offre plus de richesse au niveau de l'interface entre le terminal et un utilisateur dudit terminal (appelée interface homme-machine ou IHM) et qui permet notamment d'accéder à des services de données à débit élevé à travers un réseau large-bande via le module de communication large-bande.

De plus, un tel terminal présente l'avantage de pouvoir communiquer à travers un réseau de communication bande-étroite sécurisé de type PMR bande-étroite lorsqu'une faille de sécurité est détectée dans le deuxième module d'exploitation qui peut être plus aisément piraté lorsqu'il communique à travers un réseau de communication large-bande public via le module de communication large-bande.

Le premier module d'exploitation comprend un premier système d'exploitation configuré pour exécuter des instructions permettant d'établir une communication à travers un réseau de communication bande-étroite via le module de communication bande-étroite, et, selon un aspect de l'invention, le deuxième module d'exploitation comprend un deuxième système d'exploitation configuré pour établir une communication à travers ledit réseau de communication bande-étroite via le module de communication bande-étroite et pour établir une communication à travers un réseau de communication large-bande via le module de communication large-bande.

Le premier système d'exploitation comprend un nombre limité de tâches de démarrage de sorte à être opérationnel dans un délai inférieur à dix secondes après le démarrage du terminal. On entend par démarrage du terminal l'instant à partir duquel le terminal bascule d'un mode « éteint » à un mode « activé ». De plus, par le terme « opérationnel », on entend que le premier système d'exploitation est prêt à établir une communication à travers le réseau de communication bande-étroite.

A cette fin, le premier système d'exploitation est de préférence un système simplifié de type Linux qui permet d'établir très rapidement, en moins de dix secondes, une communication à travers le réseau de communication bande-étroite via le module de communication bande-étroite. Il est à noter que le fonctionnement dudit terminal avec ce premier système d'exploitation peut également s'effectuer sans écran dans un autre mode de réalisation, encore appelé « mode covert ».

Le deuxième système d'exploitation peut être, par exemple, un système d'exploitation de type Android®, iOS®, Windows Phone® ou Windows Mobile®. Un système d'exploitation de type Android® étant basé sur un cœur Linux, son temps de démarrage doit donc se rajouter à celui du cœur Linux avant de pouvoir établir une communication environ au bout de quarante-cinq secondes.

De manière préférée, le terminal comprend un module de gestion du premier module d'exploitation et du deuxième module d'exploitation.

Selon une caractéristique de l'invention, le module de gestion est configuré pour démarrer le premier système d'exploitation et le deuxième système d'exploitation.

Avantageusement, le module de gestion est configuré pour sélectionner alternativement l'un du premier module d'exploitation et du deuxième module d'exploitation. Le premier module d'exploitation et le deuxième module d'exploitation sont ainsi utilisés alternativement pour communiquer à travers le réseau de communication bande-étroite voire à travers le réseau de communication large-bande.

De manière préférée, le module de gestion se présente sous la forme d'un hyperviseur configuré pour sélectionner le premier module d'exploitation ou le deuxième module d'exploitation, plus précisément respectivement le premier système d'exploitation ou le deuxième système d'exploitation, de sorte que l'un ou l'autre soit utilisé pour communiquer.

Selon un aspect de l'invention, le module de gestion est configuré pour sélectionner, de préférence automatiquement, le deuxième module d'exploitation lorsque la phase de démarrage du deuxième système d'exploitation est achevée.

Selon un autre aspect de l'invention, le module de gestion est configuré pour sélectionner, de préférence automatiquement, le premier module d'exploitation suite à un dysfonctionnement du deuxième système d'exploitation, ou bien lorsque, le terminal comprenant une batterie, le niveau de la batterie est en-dessous d'un seuil prédéterminé. Le terme dysfonctionnement ici et dans le reste de la description, couvre par exemple: les situations de redémarrage (suite à un crash), d'absence d'activité (du à un bug ou un malware) ou à l'opposé d'activité trop intense (monopolisation du CPU) résultant d'un bug ou d'un malware faisant du déni de service.

Dans une forme de réalisation préférée du terminal selon l'invention, le terminal comprend un troisième module d'exploitation configuré pour établir une communication à travers un réseau de communication large-bande via le module de communication large-bande. Un tel troisième module d'exploitation peut permettre d'accéder à des services différents de ceux qui sont accessibles par le deuxième module d'exploitation. Par exemple, le troisième module d'exploitation peut être paramétrable directement par l'utilisateur du terminal alors que le deuxième module d'exploitation peut être paramétrable uniquement par un administrateur du réseau de communication bande-étroite. Par le terme « paramétrable », on entend l'installation, la modification ou la suppression d'une application permettant d'accéder à un service permettant la communication de données, notamment à travers un réseau de communication large-bande.

De préférence, le troisième module d'exploitation comprend un troisième système d'exploitation configuré pour exécuter des instructions permettant d'établir une communication à travers un réseau de communication large-bande via le module de communication large-bande.

Avantageusement, le troisième module d'exploitation étant sélectionné, le module de gestion est configuré pour sélectionner, de préférence automatiquement, le deuxième module d'exploitation suite à un dysfonctionnement du troisième système d'exploitation ou bien lorsque le terminal reçoit une communication à travers un réseau mobile privé de radiocommunication (PMR).

Avantageusement encore, le troisième module d'exploitation étant sélectionné, le module de gestion est configuré pour sélectionner, de préférence automatiquement, le premier module d'exploitation lorsque, le terminal comprenant une batterie, le niveau de la batterie est en-dessous d'un seuil prédéterminé.

Selon un aspect de l'invention, le module de gestion est configuré pour sélectionner l'un du premier module d'exploitation, du deuxième module d'exploitation ou du troisième module d'exploitation sur l'action d'un utilisateur du terminal, c'est-à-dire à partir d'une commande déclenchée par un utilisateur du terminal. Par exemple, l'utilisateur peut appuyer sur une ou plusieurs touches du terminal afin de décider de basculer du premier module d'exploitation vers le deuxième module d'exploitation ou bien du troisième module d'exploitation vers le deuxième module d'exploitation etc.

Selon une caractéristique de l'invention, le module de gestion est configuré pour transférer une communication établie par le premier module d'exploitation vers le deuxième module d'exploitation de sorte que la communication soit poursuivie via le module de communication bande-étroite en étant gérée par ledit deuxième module d'exploitation.

Selon une autre caractéristique de l'invention, le module de gestion est configuré pour transférer une communication établie par le deuxième module d'exploitation via le module de communication bande-étroite vers le premier module d'exploitation de sorte que la communication soit poursuivie via le module de communication bande-étroite en étant gérée par ledit premier module d'exploitation.

L'invention concerne aussi un système comprenant au moins un terminal tel que présenté précédemment, au moins un réseau de communication bande-étroite et au moins un réseau de communication large-bande.

De préférence, le réseau de communication bande-étroite est un réseau mobile privé de radiocommunication, c'est-à-dire un système de communication mobile par ondes radio utilisé sur une courte ou moyenne distance. Le réseau radio mobile privé de radiocommunication peut être, par exemple, un réseau Tetra, Tetrapol, P25...

Par les termes « bande étroite », on entend que le réseau permet l'échange de données à un débit qui est limité à 1 Mb/s.

Le réseau de communication large-bande peut être un réseau mobile terrestre public, par exemple, un réseau 3G UMTS (Universal Mobile Télécommunications System), 3G CDMA (Code Division Multiple Access), 4G LTE (Long-Term Evolution), 4G LTE-Advanced (Long-Term Evolution Advanced), Wireless Local Area Network (WLAN), une combinaison de ces réseaux ou d'une manière générale tout réseau sans fil à large-bande basé sur la technologie IP. Le réseau de communication large-bande peut aussi être un réseau mobile privé de radiocommunication utilisant les ressources d'un ou plusieurs réseaux mobiles terrestres publics ou d'un réseau satellite.

Par les termes « large bande », on entend que le réseau permet l'échange de données à un débit supérieur à 1 Mb/s.

Par les termes « réseau mobile », on entend un réseau de communication reliant une pluralité de terminaux mobiles.

L'invention concerne aussi un procédé de communication mis en œuvre par un terminal tel que présenté précédemment, ledit procédé étant remarquable en ce qu'il comprend une étape d'établissement par le premier module d'exploitation d'une communication à travers un réseau de communication bande-étroite via le module de communication bande-étroite, de préférence dans un délai inférieur à dix secondes après le démarrage dudit terminal, suivie d'une étape de transfert de ladite communication au deuxième module d'exploitation de sorte que la communication soit poursuivie à travers ledit réseau de communication bande-étroite via le module de communication bande-étroite.

De manière avantageuse, la communication, ou échange, de données avec le réseau de communication large-bande est réalisée à un débit supérieur à 1 Mb/s, de préférence 10 Mb/s.

De manière préférée, le procédé comprend une étape préliminaire de démarrage du premier système d'exploitation du premier module d'exploitation et une étape de démarrage du deuxième système d'exploitation du deuxième module d'exploitation.

Selon un aspect de l'invention, le procédé comprend une étape de sélection de l'un du premier module d'exploitation et du deuxième module d'exploitation.

Selon un aspect de l'invention, le procédé comprend une étape de sélection automatique du deuxième module d'exploitation lorsque la phase de démarrage du deuxième système d'exploitation est achevée.

Selon un autre aspect de l'invention, le procédé comprend une étape de sélection, de préférence automatique, du premier module d'exploitation suite à un dysfonctionnement du deuxième système d'exploitation, ou bien lorsque, le terminal comprenant une batterie, le niveau de la batterie est en-dessous d'un seuil prédéterminé.

Avantageusement, le terminal comprenant en outre un troisième module d'exploitation, le procédé comprend une étape d'établissement par ledit troisième module d'exploitation d'une communication à travers un réseau de communication large-bande via le module de communication large-bande.

Avantageusement encore, le troisième module d'exploitation étant sélectionné, le procédé comprend une étape de sélection, de préférence automatique, du premier module d'exploitation lorsque, le terminal comprenant une batterie, le niveau de la batterie est en-dessous d'un seuil prédéterminé.

Selon un aspect de l'invention, le terminal comprenant un troisième système d'exploitation sélectionné, le procédé comprend une étape de sélection, de préférence automatique, du deuxième module d'exploitation suite à un dysfonctionnement du troisième système d'exploitation, ou lorsque le terminal reçoit une notification ou encore lorsqu'un utilisateur commande manuellement la sélection.

Selon une caractéristique de l'invention, la sélection peut être déclenchée sur l'action d'un utilisateur du terminal, par exemple en appuyant sur une ou plusieurs touches du terminal, en sélectionnant une commande sur un écran tactile ou en utilisant une commande vocale.

Selon un aspect de l'invention, le procédé comprend une étape de transfert d'une communication établie par le premier module d'exploitation vers le deuxième module d'exploitation de sorte que la communication soit poursuivie via le module de communication bande-étroite en étant gérée par ledit deuxième module d'exploitation.

Selon un autre aspect de l'invention, le procédé comprend une étape de transfert d'une communication établie par le deuxième module d'exploitation via le module de communication bande-étroite vers le premier module d'exploitation de sorte que la communication soit poursuivie via le module de communication bande-étroite en étant gérée par ledit premier module d'exploitation.

D'autres caractéristiques et avantages de l'invention apparaîtront lors de la description qui suit faite en regard des figures annexées données à titre d'exemples non limitatifs et dans lesquelles des références identiques sont données à des objets semblables.

### DESCRIPTION DES FIGURES

La figure 1 illustre schématiquement une forme de réalisation du système selon l'invention.
La figure 2 illustre schématiquement une forme de réalisation du terminal selon l'invention.
La figure 3 illustre un mode de réalisation du procédé selon l'invention.

### DESCRIPTION DETAILLEE DE L'INVENTION

### Description d'une forme de réalisation du système selon l'invention

### I. Système 1

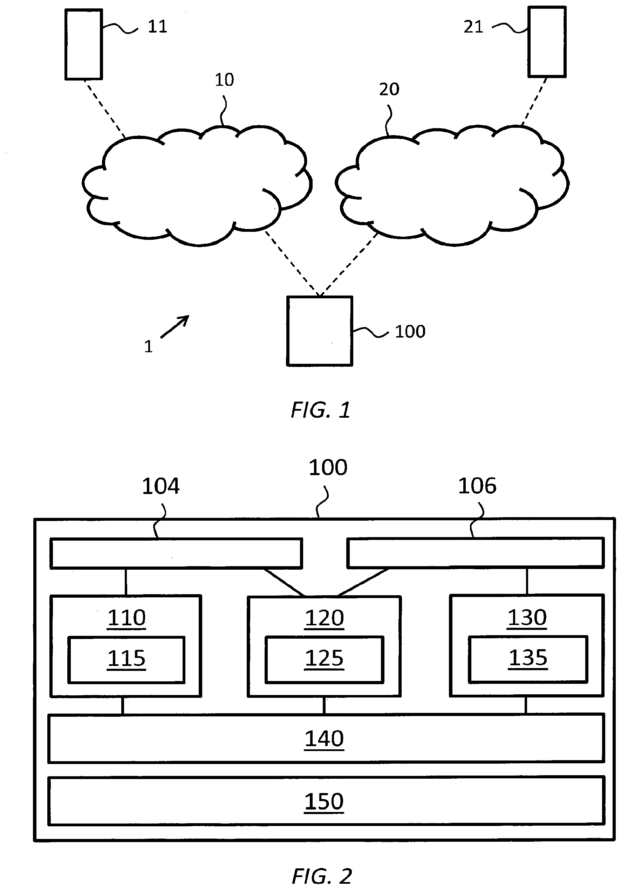

Le système 1 illustré à la figure 1 comprend un réseau de communication bande-étroite 10, un réseau de communication large-bande 20, un terminal mobile bande-étroite 11, un terminal mobile large-bande 21 et un terminal mobile dual 100 selon l'invention.

Seuls un terminal mobile bande-étroite 11, un terminal mobile large-bande 21 et un terminal mobile dual 100 ont été illustrés dans cet exemple mais il va de soi que le système peut comprendre plus d'un terminal mobile bande-étroite 11, plus d'un terminal mobile large-bande 21 et plus d'un terminal mobile dual 100.

### 1) Réseau de communication bande-étroite 10

Le réseau de communication bande-étroite se présente sous la forme d'un réseau mobile privé de radiocommunication 10, par exemple de type Tetra, Tetrapol ou P25, permettant d'interconnecter des terminaux mobiles bande-étroite 11 et/ou des terminaux mobile duals 100 selon l'invention pour qu'ils communiquent entre eux et/ou des terminaux mobiles large-bande 21 via une passerelle (non représentée) établie entre le réseau de communication bande-étroite 10 et le réseau de communication large-bande 20.

Un tel réseau 10 est dit réseau mobile privé de radiocommunication band-étroite ou « Narrow-band Private Mobile Radiocommunications (PMR) » en langue anglaise.

De tels réseaux peuvent comprendre une ou plusieurs stations de bases interconnectées ou bien comprendre uniquement des canaux de ressources dédiées (mode direct) utilisables par les terminaux afin de communiquer entre eux.

De tels réseaux de communication bande-étroite sont caractérisés par leur bande passante limitée et leur fermeture, c'est à dire qu'ils permettent d'échanger des données de voix ou des données applicatives à des débits faibles, par exemple inférieurs à 1Mb/s, en général de l'ordre de quelques Kb/s, sans passer par des réseaux ouverts de type Internet, de manière sécurisée.

Par les termes « données applicatives », on entend des données échangées entre deux entités pour la mise en oeuvre d'un service applicatif, tel que par exemple, un service de messagerie.

De tels réseaux n'offrent donc, en dehors de la voix et du fait de leur faible bande passante, qu'un nombre restreint de services tels que, par exemple, des services de messages courts (Short Data Services ou SDS en langue anglaise), mais ne permettent pas, par exemple, de faire de la vidéo ou d'échanger des emails.

### 2) Réseau de communication large-bande 20

Le réseau de communication large-bande 20 peut être un réseau mobile terrestre public ou « Public Land Mobile Network » (PLMN) en langue anglaise tel que, par exemple, un réseau un réseau 3G UMTS (Universal Mobile Telecommunications System), 3G CDMA (Code Division Multiple Access), 4G LTE (Long-Term Evolution), 4G LTE-Advanced (Long-Term Evolution Advanced), Wireless Local Area Network (WLAN), une combinaison de l'un de ces réseaux ou d'une manière générale tout réseau sans fil à large-bande basé sur la technologie IP. Le réseau de communication large-bande peut aussi être un réseau mobile privé de radiocommunication utilisant les ressources d'un ou plusieurs réseaux mobiles terrestres publics ou d'un réseau satellite.

De tels réseaux peuvent comprendre une ou plusieurs stations de bases interconnectées ou bien comprendre uniquement des canaux de ressources dédiées (mode direct) utilisables par les terminaux afin de communiquer entre eux.

Le réseau de communication large-bande 20 permet d'interconnecter des terminaux mobiles large-bande 21 et/ou des terminaux mobile duals 100 selon l'invention pour qu'ils communiquent entre eux.

Le réseau de communication large-bande 20 permet aux utilisateurs des terminaux 21, 100 autorisés d'accéder à différents services (téléphonie, messagerie, transmissions de données, diffusions de contenus audiovisuels...), notamment via Internet en situation de mobilité à partir desdits terminaux portatifs 21, 100.

De tels réseaux offrent aujourd'hui des débits supérieurs à 1Mb/s voire 10 Mb/s ou plus et permettent d'échanger des données applicatives en nombre important pour des services tels que, par exemple, des services de vidéo en temps réel, d'échange d'emails, de fichiers etc.

### 3) Terminal mobile bande-étroite 11

Le terminal mobile bande-étroite 11 est configuré pour communiquer uniquement via le réseau de communication bande-étroite 10 et comprend un système d'exploitation dont les instructions sont en faible nombre afin d'échanger uniquement des données de voix ou des données applicatives à un faible débit à travers ledit réseau de communication bande-étroite 10.

### 4) Terminal mobile large-bande 21

Le terminal mobile large-bande 21 est configuré pour communiquer uniquement via le réseau de communication large-bande 20 et comprend des moyens de traitement de données (non représentés) permettant d'échanger des données à des débits élevés, par exemple pour échanger des emails, réaliser des communications audio ou vidéo, naviguer sur le Web, télécharger des fichiers etc. Un tel terminal, par exemple tel qu'un terminal de type smartphone ou tablette tactile, comprend de manière connue un unique système d'exploitation, par exemple de type Android®, iOS®, Windows Phone® ou Windows Mobile®.

Comme mentionné auparavant, le terminal mobile large-bande 21 peut être configuré pour communiquer avec un terminal mobile bande-étroite 11 ou un terminal dual 100 via une passerelle établie entre le réseau de communication bande-étroite 10 et le réseau de communication large-bande 20.

### 5) Terminal mobile dual 100

Dans cet exemple, le terminal mobile dual 100 selon l'invention comprend un module de communication bande-étroite 104, un module de communication large-bande 106, un premier module d'exploitation 110, un deuxième module d'exploitation 120, un troisième module d'exploitation 130, un module de gestion 140 et une batterie 150.

### a) Module de communication bande-étroite 104

Le module de communication bande-étroite 104 se présente sous la forme d'un modem permettant de communiquer des données de type voix ou des données applicatives avec le réseau de communication bande-étroite 10.

### b) Module de communication large-bande 106

Le module de communication large-bande 106 se présente sous la forme d'un modem permettant de communiquer des données de type voix ou des données applicatives avec le réseau de communication large-bande 20.

Le terminal mobile large-bande 21 peut communiquer avec un terminal dual 100 via le module de communication bande étroite 104 ou via le module de communication large-bande 106.

### c) Premier module d'exploitation 110

Le premier module d'exploitation 110 comprend un premier système d'exploitation 115 de type Linux comprenant un faible nombre d'instructions permettant d'établir une communication à travers le réseau de communication bande-étroite 10 via le module de communication bande-étroite 104 dans un délai inférieur à dix secondes après le démarrage du terminal dual 100.

Le premier système d'exploitation 115 est configuré pour gérer des applications permettant d'échanger des données de voix ou des données applicatives à travers le réseau de communication bande-étroite 10 avec le terminal mobile bande-étroite 11 ou un autre terminal dual 100 connecté au réseau de communication bande-étroite 10, le réseau de communication bande-étroite 10 ne permettant qu'un échange de données à un faible débit, par exemple quelques dizaines de kilo-octets.

### d) Deuxième module d'exploitation 120

Le deuxième module d'exploitation 120 comprend un deuxième système d'exploitation 125 configuré pour exécuter des instructions permettant d'établir une communication à travers le réseau de communication bande-étroite 10 via le module de communication bande-étroite 104 et d'établir une communication à travers le réseau de communication large-bande 20 via le module de communication large-bande 106.

En d'autres termes, le deuxième système d'exploitation 125 est configuré, d'une part, pour échanger des données de voix ou des données applicatives, à travers le réseau de communication bande-étroite 10 via le module de communication bande-étroite 104, avec le terminal mobile bande-étroite 11 ou un autre terminal dual 100 connecté au réseau de communication bande-étroite 10 et, d'autre part, pour échanger des données de voix ou des données applicatives, à travers le réseau de communication large-bande 20 via le module de communication large-bande 106, avec le terminal mobile large-bande 21 ou un autre terminal dual 100 connecté au réseau de communication large-bande 20, le réseau de communication large-bande 20 permettant un échange de données à un débit élevé, par exemple supérieur à 1 Mb/s voire 10 Mb/s.

Afin d'échanger des données de type voix, le deuxième système d'exploitation 125 peut par exemple mettre en oeuvre une application connue de l'homme du métier sous le nom de « push-to-talk ».

Afin d'échanger des données applicatives en nombre important, le deuxième système d'exploitation 125 peut par exemple mettre en œuvre des applications connues de l'homme du métier de type vidéo en temps réel, échange d'emails, de fichiers etc.

Dans cet exemple, le deuxième système d'exploitation 125 peut être un système Android®, iOS®, Windows Phone® ou Windows Mobile® connu de l'homme du métier.

### e) Troisième module d'exploitation 130

Le troisième module d'exploitation 130 comprend un troisième système d'exploitation 135 configuré pour exécuter des instructions permettant d'établir une communication à travers le réseau de communication large-bande 20 via le module de communication large-bande 106.

Le troisième système d'exploitation 135 est configuré pour échanger des données de voix ou des données applicatives, à travers le réseau de communication large-bande 20 via le module de communication large-bande 106, avec le terminal mobile large-bande 21 ou un autre terminal dual 100 connecté au réseau de communication large-bande 20, le réseau de communication large-bande 20 permettant un échange de données à un débit élevé, par exemple supérieur à 1 Mb/s voire 10 Mb/s.

Afin d'échanger des données de type voix, le troisième système d'exploitation 135 peut par exemple mettre en œuvre une application connue de l'homme du métier sous le nom de « push-to-talk ».

Afin d'échanger des données applicatives en nombre important, le troisième système d'exploitation 135 peut par exemple mettre en œuvre des applications connues de l'homme du métier de type vidéo en temps réel, échange d'emails, de fichiers etc.

Dans cet exemple, le troisième système d'exploitation 135 est un système de type Android®, iOS®, Windows Phone® ou Windows Mobile® connu de l'homme du métier.

Dans un exemple de réalisation, l'utilisateur du terminal dual 100 peut installer, modifier ou supprimer des applications d'échanges de données gérées par le troisième système d'exploitation 135 mais seul un administrateur autorisé peut installer, modifier ou supprimer des applications d'échanges de données gérées par le deuxième système d'exploitation 125.

### f) Module de gestion 140

Le module de gestion 140 est configuré pour gérer le premier module d'exploitation 110, le deuxième module d'exploitation 120 et le troisième module d'exploitation 130.

Dans cet exemple, le module de gestion 140 est configuré pour démarrer le premier système d'exploitation 115, le deuxième système d'exploitation 125 et le troisième système d'exploitation 135.

Le module de gestion 140 est configuré pour sélectionner alternativement l'un du premier module d'exploitation 110, du deuxième module d'exploitation 120 ou du troisième module d'exploitation 130 qui peuvent ainsi être utilisés alternativement pour communiquer à travers le réseau de communication bande-étroite 10 ou le réseau de communication large-bande 20.

A cette fin, dans cet exemple, le module de gestion 140 se présente sous la forme d'un hyperviseur configuré pour sélectionner le premier module d'exploitation 110, le deuxième module d'exploitation 120 ou le troisième module d'exploitation 130 de sorte que l'un d'entre eux soit utilisé pour communiquer.

Le module de gestion 140 est configuré pour sélectionner, de préférence automatiquement, le deuxième module d'exploitation 120 lorsque la phase de démarrage du deuxième système d'exploitation 125 est achevée.

Le module de gestion 140 est configuré pour sélectionner, de préférence automatiquement, le premier module d'exploitation 110 suite à un dysfonctionnement du deuxième système d'exploitation 125, ou bien lorsque, le terminal 100 comprenant une batterie 150, le niveau de ladite batterie 150 est en-dessous d'un seuil prédéterminé.

Le troisième module d'exploitation 130 étant sélectionné, le module de gestion 140 est configuré pour sélectionner, de préférence automatiquement, le deuxième module d'exploitation 120 suite à un dysfonctionnement du troisième système d'exploitation 135, ou bien lorsque le terminal 100 reçoit une communication à travers un réseau mobile privé de radiocommunication (PMR) 10, 20.

Le troisième module d'exploitation 130 étant sélectionné, le module de gestion 140 est configuré pour sélectionner, de préférence automatiquement, le premier module d'exploitation 110 lorsque le niveau de la batterie 150 est en-dessous d'un seuil prédéterminé.

Le module de gestion 140 est configuré pour sélectionner l'un du premier module d'exploitation 110, du deuxième module d'exploitation 120 ou du troisième module d'exploitation 130 sur l'action d'un utilisateur du terminal 100, c'est-à-dire à partir d'une commande déclenchée par un utilisateur du terminal. Par exemple, l'utilisateur peut appuyer sur une ou plusieurs touches du terminal afin de décider de basculer du premier module d'exploitation 110 vers le deuxième module d'exploitation 120 ou bien du troisième module d'exploitation 130 vers le deuxième module d'exploitation 120 etc.

Le module de gestion 140 est configuré pour transférer une communication établie par le premier module d'exploitation 110 vers le deuxième module d'exploitation 120 de sorte que la communication soit poursuivie via le module de communication bande-étroite 104 en étant gérée par ledit deuxième module d'exploitation 120.

Le module de gestion 140 est configuré pour transférer une communication établie par le deuxième module d'exploitation 120 via le module de communication bande-étroite 104 vers le premier module d'exploitation 110 de sorte que la communication soit poursuivie en étant gérée par ledit premier module d'exploitation 110.

### Exemple de mise en œuvre de l'invention

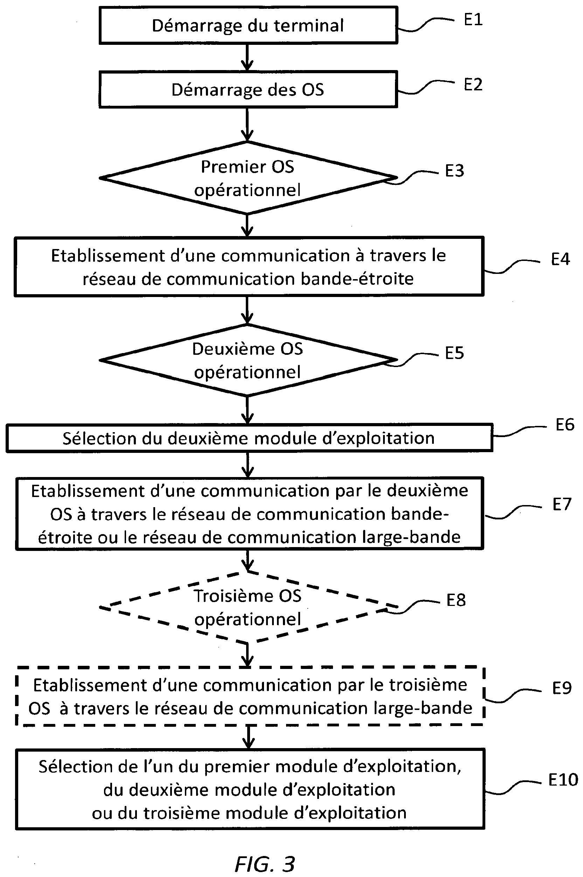

La mise en œuvre de l'invention est décrite en référence à la figure 3.

Le terminal mobile dual 100 est initialement éteint, c'est-à-dire qu'aucun système d'exploitation 115, 125, 135 du terminal 100 n'est en fonctionnement.

Lorsque le terminal 100 est démarré dans une étape E1, c'est-à-dire lorsqu'il est mis en fonctionnement, le module de gestion 140 démarre, dans une étape E2, le premier système d'exploitation 115 du premier module d'exploitation 110 puis le deuxième système d'exploitation 125 du deuxième module d'exploitation 120 puis enfin le troisième système d'exploitation 135 du troisième module d'exploitation 130.

Pendant une première phase commençant une fois que le démarrage du premier système d'exploitation 115 est achevé à l'étape E3, c'est-à-dire en moins de 10 secondes après l'allumage du terminal 100, le terminal 100 peut être utilisé dans une étape E4 pour établir une communication à travers le réseau de communication bande-étroite 10 et échanger, par exemple avec le terminal mobile privé 11, des données de voix et/ou des données applicatives via le module de communication bande-étroite 104.

Pendant cette première phase, seul le premier système d'exploitation 115 est opérationnel et permet de communiquer à travers le réseau de communication bande-étroite 10 via le module de communication bande-étroite 104. En d'autres termes, il n'est pas encore possible de communiquer avec le réseau de communication large-bande 20.

Lorsque le module de gestion 140 détecte que la phase de démarrage du deuxième système d'exploitation 125 est achevée (étape E5), par exemple au bout d'environ 45 secondes, le module de gestion 140 sélectionne, par exemple automatiquement, dans une étape E6, le deuxième module d'exploitation 120 afin que, dans une étape E7, toute communication établie par le premier système d'exploitation 115 soit poursuivie par le deuxième système d'exploitation 125 ou bien qu'une nouvelle communication soit établie à travers le réseau de communication bande-étroite 10 ou le réseau de communication large-bande 20.

Pendant cette deuxième phase démarrant une fois la phase de démarrage du deuxième système d'exploitation 125 est achevée, seul le deuxième système d'exploitation 125 est utilisé pour communiquer.

Lorsque le module de gestion 140 détecte que la phase de démarrage du troisième système d'exploitation 135 est achevée (étape E8), par exemple au bout d'environ 55 secondes, le module de gestion 140 peut sélectionner, par exemple automatiquement, le troisième module de communication 120 afin que toute communication à établir dans une étape E9, par exemple avec le terminal mobile large-bande 21, le soit à travers le réseau de communication large-bande 20 pour échanger des données de voix et/ou des données applicatives via le module de communication large-bande 106.

Une telle sélection peut être réalisée en fonction des applications comme lorsque, par exemple, certaines applications sont gérées par le troisième module d'exploitation 130 alors qu'elles ne le sont pas via deuxième module d'exploitation 120.

Une fois encore, lorsque le troisième système d'exploitation 135 est sélectionné, seul ledit troisième système d'exploitation 135 est utilisé pour communiquer.

Lorsque le deuxième système d'exploitation 125 est sélectionné mais fait face à un dysfonctionnement, ou bien lorsque le niveau de la batterie 150 est en-dessous d'un seuil prédéterminé, par exemple 20 % de sa charge maximum, alors le module de gestion 140 sélectionne, par exemple automatiquement, dans une étape E10 le premier module d'exploitation 110 de sorte que seul le premier système d'exploitation 115 soit alors utilisable pour permettre, par exemple, d'économiser de l'énergie.

De même, lorsque le troisième système d'exploitation 135 est sélectionné mais fait face à un dysfonctionnement, ou bien lorsque le terminal 100 reçoit une communication pour un service PMR géré par le deuxième module d'exploitation 120 alors le module de gestion 140 sélectionne, par exemple automatiquement, toujours dans une étape E10, le deuxième module d'exploitation 120 de sorte que le deuxième système d'exploitation 125 devienne alors utilisable afin que le terminal 100 initie ou poursuive des échanges des données à un débit élevé via le module de communication large-bande 106.

De plus, lorsque le troisième système d'exploitation 135 est sélectionné mais que le niveau de la batterie 150 est en-dessous d'un seuil prédéterminé, par exemple 20 % de sa charge maximum, alors le module de gestion 140 sélectionne automatiquement, toujours dans une étape E10, le module de communication privé 110 de sorte que seul le premier système d'exploitation 115 soit alors utilisable, celui-ci permettant en effet d'économiser de l'énergie.

Par ailleurs, lorsqu'un utilisateur du terminal 100 souhaite sélectionner lui-même l'un du premier module d'exploitation 110, du deuxième module d'exploitation 120 ou du troisième module d'exploitation 130, il peut par exemple appuyer sur une ou plusieurs touches du terminal 100 afin de sélectionner l'un des modules d'exploitation 110, 120, 130 non utilisé. Par exemple, il peut décider de basculer du premier module d'exploitation 110 vers le deuxième module d'exploitation 120 ou bien du troisième module d'exploitation 130 vers le deuxième module d'exploitation 120 etc.

De manière additionnelle, lorsque le module de gestion 140 sélectionne le deuxième module d'exploitation 120 et qu'une communication a été préalablement établie par le premier module d'exploitation 110, le module de gestion 140 peut basculer ladite communication de sorte qu'elle soit poursuivie par le premier module de communication public 120 à travers le réseau de communication bande-étroite 20 via le module de communication bande-étroite 104.

De même, lorsque le module de gestion 140 sélectionne le premier module d'exploitation 110 et qu'une communication a été préalablement établie par le deuxième module d'exploitation 120, le module de gestion 140 peut basculer ladite communication de sorte qu'elle soit poursuivie par le premier module d'exploitation 110 à travers le réseau de communication bande-étroite 10 toujours via le module de communication bande-étroite 104.

## Revendications

1. Terminal mobile de communication (100) comprenant un module de communication bande-étroite (104), un module de communication large-bande (106), un premier module d'exploitation (110) et un deuxième module d'exploitation (120), ledit premier module d'exploitation (110) étant configuré pour établir une communication à travers un réseau de communication bande-étroite (10) via ledit module de communication bande-étroite (104), ledit deuxième module d'exploitation (120) étant configuré pour établir une communication à travers ledit réseau de communication bande-étroite (10) via le module de communication bande-étroite (104) et pour établir une communication à travers un réseau de communication large-bande (20) via ledit module de communication large-bande (106), le terminal étant caractérisé en que le premier module d'exploitation (110) comprend un premier système d'exploitation (115) configuré pour exécuter des instructions permettant d'établir une communication à travers un réseau de communication bande-étroite (10) via le module de communication bande-étroite (104), ledit premier système d'exploitation (115) comprenant un nombre limité de tâches de démarrage de sorte à être opérationnel dans un délai inférieur à dix secondes après le démarrage du terminal (100).

2. Terminal selon la revendication précédente, dans lequel, le deuxième module d'exploitation (120) comprend un deuxième système d'exploitation (125) configuré pour établir une communication à travers ledit réseau de communication bande-étroite (10) via le module de communication bande-étroite (104) et pour établir une communication à travers un réseau de communication large-bande (20) via le module de communication large-bande (106).

3. Terminal selon l'une des revendications précédentes, ledit terminal (100) comprenant un module de gestion (140) du premier module d'exploitation (110) et du deuxième module d'exploitation (120).

4. Terminal selon la revendication précédente, dans lequel le module de gestion (140) est configuré pour démarrer le premier système d'exploitation (115) et le deuxième système d'exploitation (125).

5. Terminal selon l'une des revendications précédentes 3 et 4, dans lequel le module de gestion (140) est configuré pour sélectionner alternativement l'un du premier module d'exploitation (110) et du deuxième module d'exploitation (120).

6. Terminal selon l'une des revendications précédentes 3 à 5, dans lequel le module de gestion (140) est configuré pour transférer la communication établie par ledit premier module d'exploitation (110) à travers ledit réseau de communication bande-étroite (10) vers ledit deuxième module d'exploitation (120) de sorte que la communication soit poursuivie via le module de communication bande-étroite (104) en étant gérée par ledit deuxième module d'exploitation (120).

7. Terminal selon l'une des revendications précédentes 3 à 6, dans lequel le module de gestion (140) est configuré pour sélectionner le deuxième module d'exploitation (120) lorsque la phase de démarrage du deuxième système d'exploitation (125) est achevée.

8. Terminal selon l'une des revendications précédentes 3 à 6, dans lequel le module de gestion (140) est configuré pour sélectionner le premier module d'exploitation (110) lorsque le deuxième système d'exploitation (125) redémarre ou lorsque, le terminal (100) comprenant une batterie (150), le niveau de la batterie (150) est en-dessous d'un seuil prédéterminé, ou sur l'action d'un utilisateur dudit terminal (100).

9. Terminal selon l'une des revendications précédentes 3 à 6, dans lequel le terminal (100) comprend en outre un troisième module d'exploitation (130) comprenant un troisième système d'exploitation (135) configuré pour exécuter des instructions permettant d'établir une communication à travers un réseau de communication large-bande (20) via le module de communication large-bande (106).

10. Système (1) comprenant au moins un terminal (100) selon l'une des revendications précédentes, au moins un réseau de communication bande-étroite (10) et/ou au moins un réseau de communication large-bande (20).

## Patentansprüche

1. Mobiles Kommunikationsterminal (100), umfassend ein Schmalband-Kommunikationsmodul (104), ein Breitband-Kommunikationsmodul (106), ein erstes Betriebsmodul (110) und ein zweites Betriebsmodul (120), wobei das genannte erste Betriebsmodul (110) zum Aufbauen einer Kommunikation durch ein Schmalband-Kommunikationsnetz (10) über das genannte Schmalband-Kommunikationsmodul (104) ausgestaltet ist, wobei das genannte zweite Betriebsmodul (120) zum Aufbauen einer Kommunikation durch das genannte Schmalband-Kommunikationsnetz (10) über das Schmalband-Kommunikationsmodul (104) und zum Aufbauen einer Kommunikation durch ein Breitband-Kommunikationsnetz (20) über das genannte Breitband-Kommunikationsmodul (106) ausgestaltet ist, wobei das Terminal **dadurch gekennzeichnet ist, dass** das erste Betriebsmodul (110) ein erstes Betriebssystem (115) umfasst, das zum Ausführen der Anweisungen ausgestaltet ist, die das Aufbauen einer Kommunikation durch ein Schmalband-Kommunikationsnetz (10) über das Schmalband-Kommunikationsmodul (104) zulässt, wobei das genannte erste Betriebssystem (115) eine begrenzte Anzahl von Startaufgaben derart umfasst, dass es innerhalb einer Frist von weniger als zehn Sekunden nach dem Starten des Terminals (100) betriebsbereit ist.

2. Terminal gemäß dem voranstehenden Anspruch, bei dem das zweite Betriebsmodul (120) ein zweites Betriebssystem (125) umfasst, das zum Aufbauen einer Kommunikation durch das genannte Schmalband-Betriebssystem (10) über das Schmalband-Kommunikationsmodul (104) und zum Aufbauen einer Kommunikation durch ein Breitband-Kommunikationsnetz (20) über das Breitband-Kommunikationsmodul (106) ausgestaltet ist.

3. Terminal gemäß einem der voranstehenden Ansprüche, wobei das genannte Terminal (100) ein Verwaltungsmodul (140) des ersten Betriebsmoduls (110) und des zweiten Betriebsmoduls (120) umfasst.

4. Terminal gemäß dem voranstehenden Anspruch, bei dem das Verwaltungsmodul (140) zum Starten des ersten Betriebssystems (115) und des zweiten Betriebssystems (125) ausgestaltet ist.

5. Terminal gemäß einem der voranstehenden Ansprüche 3 und 4, bei dem das Verwaltungsmodul (140) zum abwechselnden Auswählen entweder des ersten Betriebsmoduls (110) oder des zweiten Betriebsmoduls (120) ausgestaltet ist.

6. Terminal gemäß einem der voranstehenden Ansprüche 3 bis 5, bei dem das Verwaltungsmodul (140) zum Übertragen der Kommunikation ausgestaltet ist, die von dem genannten ersten Betriebsmodul (110) durch das genannte Schmalband-Kommunikationsnetz (10) zu dem genannten zweiten Betriebsmodul (120) derart ausgestaltet ist, dass die Kommunikation über das Schmalband-Kommunikationsmodul (104) fortgeführt ist und dabei von dem genannten zweiten Betriebsmodul (120) verwaltet ist.

7. Terminal gemäß einem der voranstehenden Ansprüche 3 bis 6, bei dem das genannte Verwaltungsmodul (140) zum Auswählen des zweiten Betriebsmoduls (120) ausgestaltet ist, wenn die Startphase des zweiten Betriebssystems (125) abgeschlossen ist.

8. Terminal gemäß einem der voranstehenden Ansprüche 3 bis 6, bei dem das Verwaltungsmodul (140) zum Auswählen des ersten Betriebsmoduls (110) ausgestaltet ist, wenn das zweite Betriebsmodul (125) wieder startet oder wenn das Niveau der Batterie (150) unterhalb eines vorbestimmten Schwellenwertes liegt, wenn das Terminal eine Batterie (150) umfasst, oder auf die Betätigung eines Nutzers des genannten Terminals (100) hin.

9. Terminal gemäß einem der voranstehenden Ansprüche 3 bis 6, bei dem das Terminal (100) darüber hinaus ein drittes Betriebsmodul (130) umfasst, das ein drittes Betriebssystem (135) umfasst, das zum Ausführen der Anweisungen ausgestaltet ist, die den Aufbau einer Kommunikation durch ein Breitband-Kommunikationsnetz (20) über das Breitband-Kommunikationsmodul (106) ermöglichen.

10. System (1), umfassend wenigstens ein Terminal (100) gemäß einem der voranstehenden Ansprüche, wenigstens ein Schmalband-Kommunikationsnetz (10) und / oder ein Breitband-Kommunikationsnetz (20).

## Claims

1. Mobile communication terminal (100) including a narrow-band communication module (104), a broad-band communication module (106), a first operating module (110) and a second operating module (120), said first operating module (110) being configured to establish a communication through a narrow-band communication network (10) via said narrow-band communication module (104), said second operating module (120) being configured to establish a communication through said narrow-band communication network (10) via the narrow-band communication module (104) and to establish a communication through a broad-band communication network (20) via said broad-band communication module (106), the mobile communication terminal (100) being **characterized in that** said first operating module (110) includes a first operating system (115) configured to execute instructions making it possible to establish a communication through a narrow-band communication network (10) via the narrow-band communication module (104), said first operating system (115) including a limited number of booting tasks so as to be operational within a time period less than ten seconds after the booting of the terminal (100) .

2. Terminal according to the preceding claim, wherein the second operating module (120) includes a second operating system (125) configured to establish a communication through said narrow-band communication network (10) via the narrow-band communication module (104) and to establish a communication through a broad-band communication network (20) via the broad-band communication module (106).

3. Terminal according to one of the preceding claims, said terminal (100) including a management module (140) of the first operating module (110) and of the second operating module (120).

4. Terminal according to the preceding claim, wherein the management module (140) is configured to boot the first operating system (115) and the second operating system (125).

5. Terminal according to one of the preceding claims 3 and 4, wherein the management module (140) is configured to select alternatively one of the first operating module (110) and the second operating module (120) .

6. Terminal according to one of the preceding claims 3 to 5, wherein the management module (140) is configured to transfer the communication established by said first operating module (110) via said narrow-band communication network (10) to said second operating module (120) so that the communication is continued via said narrow-band communication module (104) by being managed by said second operating module (120).

7. Terminal according to one of the preceding claims 3 to 6, wherein the management module (140) is configured to select said second operating module (120) when the booting phase of the second operating system (125) is finished.

8. Terminal according to one of the preceding claims 3 to 6, wherein the management module (140) is configured to select the first operating module (110) when the second operating system (125) re-boots or when, the terminal (100) including a battery (150), the battery level (150) is below a predetermined threshold, or on the action of a user of said terminal (100).

9. Terminal according to one of the preceding claims 3 to 6, wherein the terminal (100) further includes a third operating module (130) including a third operating system (135) configured to execute instructions making it possible to establish a communication through a broad-band communication network (20) via the broad-band communication module (106) .

10. System (1) including at least one terminal (100) according to one of the preceding claims, at least one narrow-band communication network (10) and/or at least one broad-band communication network (20).
